Europäisches Patentamt

European Patent Office

Office européen des brevets

(19)

(11) Publication number: **0 071 318**

**A1**

(12) # EUROPEAN PATENT APPLICATION

(21) Application number: **82200973.4**

(22) Date of filing: **28.07.82**

(51) Int. Cl.³: **B 65 G 17/36**

(30) Priority: **28.07.81 DE 3129678**

(43) Date of publication of application:
**09.02.83 Bulletin 83/6**

(84) Designated Contracting States:
**AT BE CH FR GB IT LI LU NL SE**

(71) Applicant: **SEAGOLD LIMITED**
**64 Ballinclea Heights**
**Killiney County Dublin(IE)**

(72) Inventor: **Ryan, Patrick John**
**64 Ballinclea Heights**
**Killiney County Dublin(IE)**

(74) Representative: **van der Beek, George Frans et al,**
**Nederlandsch Octrooibureau Johan de Wittlaan 15 P.O.**
**Box 29720**
**NL-2502 LS Den Haag(NL)**

(54) Conveyor bucket of a conveying means guiding a series of conveyor buckets in a circulatory manner.

(57) A conveyor bucket (1) of a bucket conveyor, or the like, possesses a flexible lining (3) which is fastened (5, 11, 12) only at its front edge (10), and which slips over, towards the outside, when the material, which has been conveyed, is tipped out.

This slipping-over of the lining prevents material, which tends to adhere, from remaining stuck inside the conveyor bucket during the process of tipping-out.

FIG.3.

EP 0 071 318 A1

Croydon Printing Company Ltd.

Conveyor bucket of a conveying means guiding a series of
conveyor buckets in a circulatory manner.

The invention relates to a conveyor bucket of a conveying means guiding a series of conveyor buckets in a circulatory manner and emptying by tipping, especially for material which tends to adhere.

Conveying means of this type are known in a great diversity of different designs. The conveyor buckets can be arranged on endless chains, cables, belts or the like, or they can also be arranged on the periphery of a wheel, they can serve solely to transport material, especially upwards, or they can, at the same time, scoop material from a loose heap, or dig it out of natural soil ; the conveyor buckets can have the most diverse shapes and arrangements, and can be referred to as buckets, tubs, scoops, etc., as well as many other designations.

An old problem with these conveying means, which has still not yet been solved satisfactorily, is the adhesion ("caking-on"), inside the conveyor buckets, of moist and more or less sticky material.

The object underlying the invention is to detach adhering material from the bucket wall during the process of emptying the buckets by tipping.

According to the invention, a conveyor bucket is provided for this purpose, this bucket possessing a flexible lining which is fastened only in a localised manner, in such a way that it lifts from its support during the process of tipping, and slips outwards, assuming a convex shape.

The change in shape occurring during the process of slipping outwards and becoming convex destroys the bond between the adhering material and the lining, in particular since this change of shape, considered geometrically, represents the removal of the lining from a lump of material, in every case around one point. In addition, there is the jerk, with which the lining is suddenly held at the end of the process of slipping outwards and assuming a convex shape and which has the effect of throwing off the material. If the lining is elastic, there is accordingly the further superimposition of the stretching of the lining during the process of slipping outwards and assuming a convex shape and during the abovementioned jerk, this stretching additionally exerting shearing forces on the bond between the adhering material and the lining.

As soon as the conveyor bucket returns from its tipping position into its filling position, the lining falls back again under its own weight. No later than when the weight of the material, which has been received, acts on it, does it come into contact again, in its entirety, with the rigid bucket wall.

The lining is preferably composed of a sheet of rubber, or a sheet of plastic. It could, however, also be composed of a large number of rigid segments, connected in a mobile manner.

It is proposed, as an advantageous further development of the invention, that the lining be installed only in a rear section of the conveyor bucket, and that it be held only at its front edge.

During the process of tipping the conveyor bucket the lining, which is held only at its front edge, slips over completely, in the outward direction. The effects, explained above, are then particularly marked, and, in accordance therewith, the result which is aimed at is likewise particularly marked. Restricting the lining to the rear section of the conveyor bucket prevents it from protruding, in the slipped-over position, from the bucket, or permits it to protrude to only a comparatively small extent, so that it neither creates problems, nor is exposed to effects which could damage it. Material which is adhering to the bucket wall, in the front, unlined section, is torn off by the material thrown from the rear section, and is carried out with the latter material.

The lining is expediently fastened by means of a clamping ring which is made of sheet metal, is form-fitted into the conveyor bucket and, at its rear edge, possesses a bead, preferably in the form of a zone which has been bent over, this bead protecting the lining which hangs over it when in the slipped-over position.

It is further proposed, in a further development of the invention, that the lining material extends under the clamping ring, up to the front edge of the conveyor bucket and, at this edge, possesses a portion which has been bent over towards the outside, this portion being surrounded by a zone, which has been bent over, of the clamping ring. This locks the fastening. Finally, the same purpose is served by the proposal to locate the lining material under the clamping ring, preferably near the rear edge thereof, by means of a rib, either singly or repeatedly, in a peripheral crease which is formed on the conveyor bucket.

However, other possible fastening methods certainly also exist. The lining could be glued on, vulcanised on, welded on, melted on, or manufactured, ab initio, in contact with the bucket wall, and there are very many other possibilities.

An illustrative embodiment of the invention is reproduced in the drawing, in which.

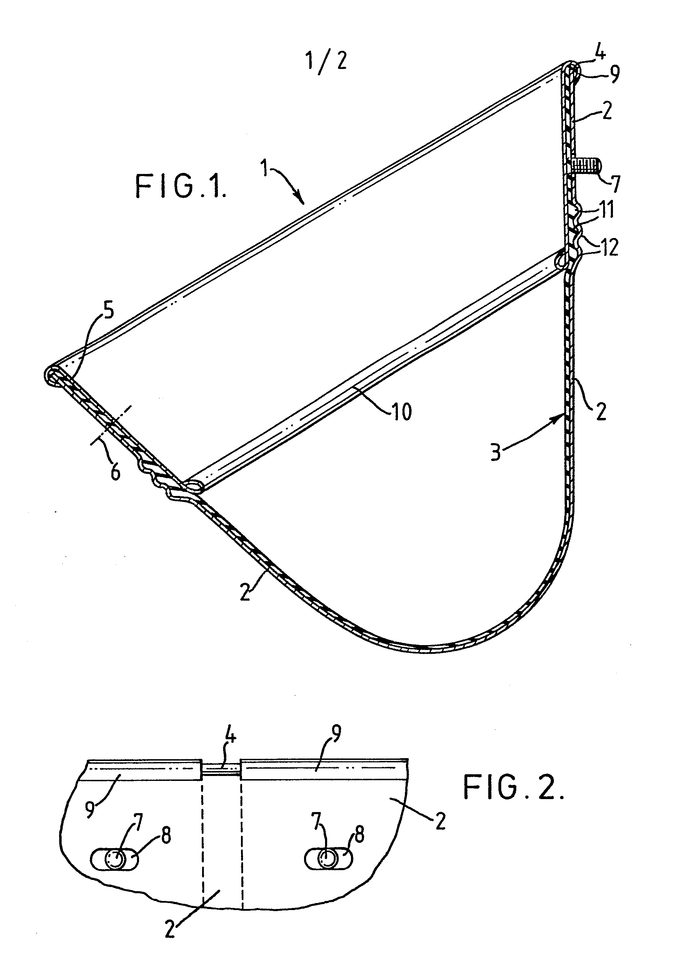

Figure 1 shows a conveyor bucket, in the filling position, in axial section.

Figure 2 shows a partial view, according to Figure 1, seen from the right.

Figure 3 shows the conveyor bucket, in the same section as in Figure 1, in the tipping position.

A conveyor bucket 1 is provided, on the inside of its wall 2 which is made of a rigid material, for example sheet metal, with a lining 3, made of a flexible material, for example rubber. The lining 3 rests against the wall 2, without any discontinuities. The lining material extends, in the conveyor bucket, up to the edge, and engages around this edge by means of a lip 4.

The lining 3 is fastened by means of a clamping ring 5 which is composed, in the same manner as the wall, of, for example, sheet metal, this ring forming the inner wall of the conveyor bucket, in its front section, up to approximately 30 to 50 % of its depth. The clamping ring is itself fastened to the wall 2 by means of a screw, indicated at 6, and, on · the opposite side, by means of two threaded bolts 7, which are rigidly located on the ring, extend, in slots 8, through the wall 2, and, after having been pulled apart - the clamping ring 5 being discontinuous and the threaded bolts 7 being located near its two ends - have been fixed to the wall by means of nuts which are not shown. At the edge of the conveyor bucket, the clamping ring 5 possesses a zone 9, which has been bent over and which completely surrounds the lip 4, and, at its inner edge, possesses a bead 10 which is similarly produced by a bent-over portion.

Near the inner edge of the clamping ring 5, the lining material is located, by means of three peripheral ribs 11, in correspondingly shaped peripheral creases 12 in the wall 2.

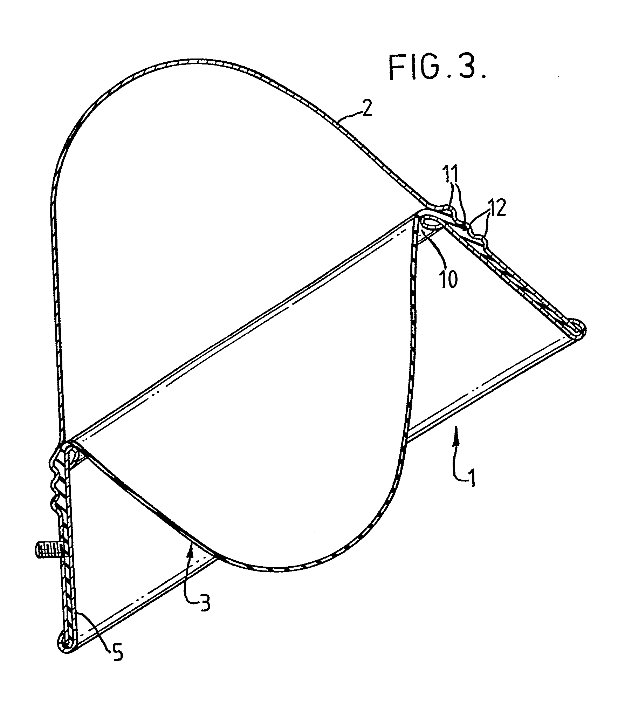

In the tipping position of the conveyor bucket 1, this position being shown in Figure 3, the lining 3 falls outwards and hangs over the bead 10. In this position it is held, in particular, by the ribs 11. Its tensile strength can, if required, be increased by means of flexible inserts, such as cord plies.

The action occurring during the process of tipping out the conveyed material has been explained in detail in the text above.

## CLAIMS

1. Conveyor bucket of a conveying means guiding a series of conveyor buckets in a circulatory manner and emptying by tipping, especially for material which tends to adhere, characterised in that the conveyor bucket (1) possesses a flexible lining (3), which is fastened (5, 10-12) only in a localised manner in such a way that it lifts from its support (2) during the process of tipping (Figure 3) and slips outwards, assuming a convex shape.

2. Conveyor bucket according to Claim 1, characterised in that the lining (3) is composed of a sheet, preferably made of rubber or plastic.

3. Conveyor bucket according to Claim 1 or 2, characterised in that the lining (3) is installed only in a rear section of the conveyor bucket (1).

4. Conveyor bucket according to one of Claims 1 to 3, characterised in that the lining (3) is held only at its front edge (10).

5. Conveyor bucket according to Claims 3 and 4, characterised in that the lining (3) is fastened by means of a clamping ring (5) which is made of sheet metal, is form-fitted into the conveyor bucket and, at its rear edge, possesses a bead (9), which is preferably a zone which has been bent over in the shape of a bead.

6. Conveyor bucket according to Claim 5, characterised in that the lining material extends under the clamping ring (5), up to the front edge of the conveyor bucket (1) and, at this edge, possesses a portion (4) which has been bent over towards the outside, this portion (4) being surrounded by a zone (9), which has been bent over, of the clamping ring (5).

7. Conveyor bucket according to Claim 5 or 6, characterised in that the lining material under the clamping ring (5), preferably near the rear edge thereof, is located by means of a rib (11), either singly or repeatedly, in a peripheral crease (12) which is formed on the conveyor bucket.

0071318

1/2

FIG.1.

FIG.2.

FIG.3.

# EUROPEAN SEARCH REPORT

**European Patent Office**

Application number

EP 82 20 0973.4

## DOCUMENTS CONSIDERED TO BE RELEVANT

| Category | Citation of document with indication, where appropriate, of relevant passages | Relevant to claim |
|---|---|---|
| X | AT – B – 341 416 (VEREINIGTE ÖSTERREI-CHISCHE EISEN- UND STAHLWERKE – ALPINE MONTAN AG) <br> * page 2, line 13 to page 3, line 23; fig. 1, 2 * <br> — | 1,2 |
| X | DE – C – 588 055 (HEILER) <br> * claim; fig. 1, 2 * <br> — | 1,2 |
| X | US – A – 2 834 128 (KOLBE) <br> * column 1, line 42 to column 2, line 4; fig. 2 * <br> — | 1–3 |
| X | US – A – 885 049 (HOLCOMB) <br> * page 1, lines 7 to 41; fig. 1, 2 * <br> — | 1 |
| A | DE – C – 78 234 (NEUERBURG) <br> * claim * <br> — | 1 |
| A | DE – C – 1 155 718 (CATERPILLAR TRACTOR CO.) <br> ———— | |

### CLASSIFICATION OF THE APPLICATION (Int. Cl. 3)

B 65 G 17/36

### TECHNICAL FIELDS SEARCHED (Int.Cl. 3)

B 65 G 17/00
B 65 G 47/00
B 65 G 65/00
E 02 F 3/00

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 19-10-1982 | SIMON |

EPO Form 1503.1 06.78